# EUROPEAN PATENT APPLICATION

(11) **EP 1 286 538 A2**
(43) Date of publication of application: **26.02.2003**
(21) Application number: 02292022.7
(22) Date of filing: 12.08.2002
(51) Int. Cl.: H04N 5/00, H04N 7/24

(54) **Method for DVD recording of a data stream and DVD recorder**

(30) Priority: 23.08.2001 EP 01250305
(71) Applicant: Thomson Licensing S.A., 92100 Boulogne-Billancourt (FR)
(72) Inventor: Adolph, Dirk, 30952 Ronnenberg (DE); Winter, Marco, 30173 Hannover (DE); Chevtsov, Andrei, 30165 Hannover (DE)
(74) Representative: Hartnack, Wolfgang, Dipl.-Ing.

(57) **Abstract**

When recording real-time data on a DVD streamer or DVR the arrival time ATC of every real-time packet received by the recorder is stored along with the data on the recording medium. This is done to provide - by means of the ATCs - the same timing for the playback of the stored real-time stream as the timing of the recording process. However, a data stream received via the Internet TCP/IP protocol having a varying data rate is not played back correctly because the variations of the data rate of the received data stream are present in the played back signal. In the inventive data stream recording an arrival time stamp is provided (2, 3) for each data packet of said data stream, which arrival time stamps represent the arrival times of said data packets and are intended for temporally correct replay of the data stream to be recorded. However, said arrival time stamps are re-stamped (7) in accordance with a desired data rate for the playback of said data stream to be recorded.

## Description

The invention relates to a method for DVD recording of a data stream and to a DVD recorder.

### Background

When recording real-time data on a DVD streamer or DVR, the arrival time ATC of every real-time packet received by the recorder is stored along with the data on the recording medium. This is done to provide - by means of the ATCs - the same timing for the playback of the stored real-time stream as the timing of the recording process. 'DVR' means digital video recording optical disk system, which system uses higher storage density and shorter laser wavelengths, and represents the next-generation DVD system.
In other words when a data packet is received it is time-stamped with its arrival time. Playback is performed by reading the data packets in the same sequence and with the same timing as defined by the ATCs such that the result of the playback is a temporally exact reproduction of the received data stream. This procedure is working for a guaranteed bandwidth transfer channel, which is true for home networks or broadcasting.

EP-A-0986248 shows a method and apparatus for time stamping a bit stream to be recorded via an IEEE 1394 interface. A settop box adds time stamps to the data packets in order to prevent jitter.
US-A-6111896 shows a re-multiplexer for video program bearing transport streams with program clock reference time stamp adjustment. Data in a MPEG-2 transport stream is re-stamped based on a predetermined time-shift between the program system time clock and a local reference clock.

### Invention

Prior art real-time digital recorders such as DVD streamers or DVR have a disadvantage in that a data stream received via the Internet TCP/IP protocol having a varying data rate is not played back correctly because the variations of the data rate of the received data stream are present in the played back signal.

A problem to be solved by the invention is to provide an improved data stream recording method allowing recording from a non-guaranteed bandwidth transfer channel, and a corresponding recorder. This problem is solved by the method disclosed in claim 1. A recorder that utilises this method is disclosed in claim 7.

In principle, the inventive method is suited for recording a data stream, including the steps:
- providing an arrival time stamp for each data packet of said data stream, which arrival time stamps represent the arrival times of said data packets and are intended for temporally correct replay of the data stream to be recorded;
- re-stamping said arrival time stamps in accordance with a desired data rate for the playback of said data stream to be recorded.

In principle the inventive digital recorder for recording a data stream includes:
- means for providing an arrival time stamp for each data packet of said data stream, which arrival time stamps represent the arrival times of said data packets and are intended for temporally correct replay of the data stream to be recorded;
- means for re-stamping said arrival time stamps in accordance with a desired data rate for the playback of said data stream to be recorded.

Advantageous additional embodiments of the invention are disclosed in the respective dependent claims.

The invention is advantageous in that it allows recording a real-time stream via an Internet connection using the TCP/IP protocol and allows a high-quality playback of the received data stream.
When receiving a real-time stream via the Internet the appearance of delays during packets delivery cannot be avoided due to the nature of an Internet transmission having varying data rates. In a prior art real-time digital recorder this results in a corruption of the playback functionality, ie. delays during reception for recording of data packets are reconstructed during playback processing. This can result in interruptions during playback output when the corresponding output bit-buffer runs empty.

Advantageously the invention allows a correct uninterrupted playback irrespective of variations of the data rate of the real-time stream received via an Internet connection. According to the invention, the ATCs are modified during the recording process such that the correct playback of an Internet recorded real-time data stream becomes possible even if the bandwidth of the transfer channels is not sufficient for passing the target data rate.
The ATCs are re-stamped according to the intended target data rate such that a playback process of the recorded real-time data provides the correct transfer of packets to the real-time stream decoder without interruptions. This way a 'starvation' and an 'overfeeding' is avoided during playback by the digital recorder.

### Drawings

Exemplary embodiments of the invention are described with reference to the accompanying drawings, which show in:
- Fig. 1: block diagram for a first embodiment of the invention;
- Fig. 2: block diagram for a second embodiment of the invention.

### Exemplary embodiments

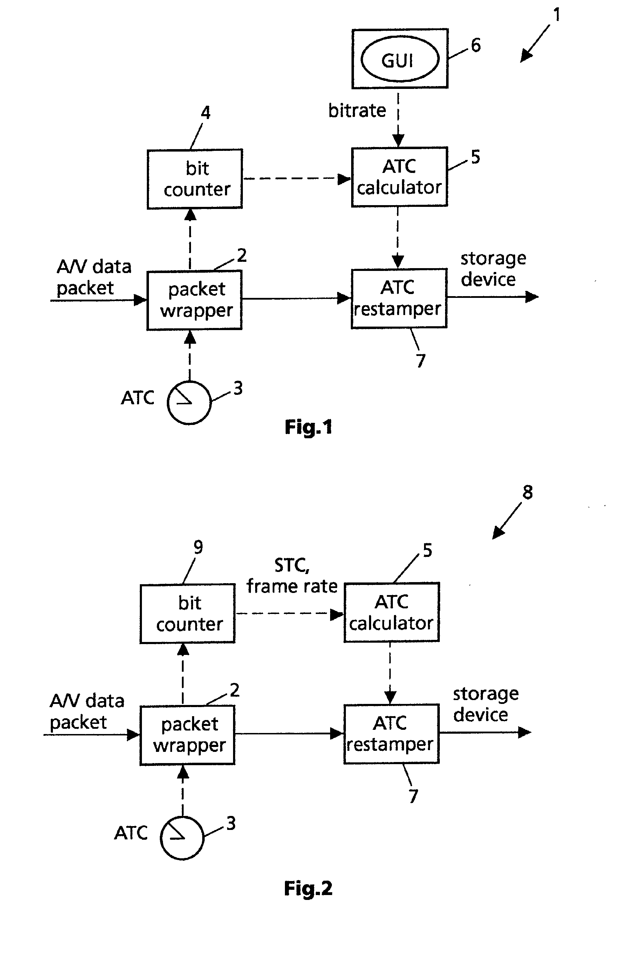

Figure 1 depicts a real-time digital recorder 1 receiving data packets of digital input data, such as e.g. video and/or audio data of an MPEG-2 stream, whereby the audio data can be AC-3 encoded data. The input data is received by recorder 1 via an Internet connection. The input data packets are fed to a packet wrapper 2 that is connected to an arrival time clock (ATC) 3. The packet wrapper 2 assigns the arrival time provided by the arrival time clock 3 to each received data packet. A data packet received at a certain time instant together with its arrival time provided by the arrival time clock 3 is formed into a data packet by the packet wrapper 2.
The packet wrapper 2 is connected to a bit counter 4 that counts the bits of the received data packets. The bit counter 4 is connected to an ATC calculator 5, which in turn is connected to a graphical user interface 6. A user can input a desired bit rate or data rate via user interface 6 for input to the ATC calculator 5. Further, the ATC calculator 5 receives the number of bits received by the recorder 1 from the bit counter 4.
Based on the number of received bits and the target bit rate the ATC calculator 5 determines arrival times for the data packets which would result in an uninterrupted playback by the real-time stream decoder. These arrival times are provided by the ATC calculator 5 to the ATC re-stamper 7 performing a corresponding re-stamping of the packets created by the packet wrapper 2. For this purpose the ATC re-stamper 7 is connected to the packet wrapper 2 in order to receive the corresponding data packets. The output of ATC re-stamper 7 is provided to a storage unit (not depicted) for later playback.
When recording onto a real-time digital recorder like DVD streamer or DVR a real-time stream via the Internet or via another channel having an insufficient bit-rate or a bit-rate that is too large, the arrival time stamps provided by the input wrapping process, ie. by the packet wrapper 2, deviate from the arrival time stamps, which would be required for a correct and uninterrupted high quality playback. Interruptions during playback or loss of data during playback can occur in prior art devices because the ATCs stamped on the arriving packets can cause a starvation (pull application) or an overfeeding (push application) when being played back by the digital recorder. This problem is solved in recorder 1 as shown in Figure 1 as the data packets are re-stamped according to the intended target bit rate in such a way that a playback process being executed after the recording was completed provides the correct and uninterrupted transfer of data packets to the real-time stream recorder.

Figure 2 shows an alternative embodiment of a digital recorder 8, wherein like elements have the same reference numbers as in Figure 1. However, in the embodiment of Figure 2 no user input for a desired bit rate is required. There is a bit stream analyser 9 connected between the packet wrapper 2 and the ATC calculator 5, instead of a bit counter 4 (cf. Fig. 1). The bit stream analyser extracts information from the received data packets. This is done by parsing the content of the bit-stream, ie. the packet load, and by detecting the system clock reference STC or frame rate, ie. in case of video data input the presentation time stamp PTS, in order to calculate the new ATC. The STC or frame rate information is located within the transferred bit-stream itself, which in the example considered here is an MPEG transport stream.
The desired data rate can also be determined in accordance with the nature of the data stream, the data rate preferably being 25 or 30 video frames per second in the case of video data.
As a result of the bit stream analysis the bit stream analyser 9 provides the STC and/or the frame rate to the ATC calculator 5 for calculation of the new ATCs for the received data packets. The new ATCs are provided by the ATC calculator 5 to the ATC re-stamper 7 for re-stamping of the data packets provided by packet wrapper 2.

The timing information that is embedded within an MPEG 2 transport stream itself is not modified but only the arrival time stamps are modified for correct playback.

Advantageously, no additional data are required from the sender of the data stream for a modification of the arrival time stamps in accordance with this embodiment of the invention.

The functionality as described above by making reference to figures 1 and 2 can be provided within the recorder 1 and the recorder 8, respectively, by a software module. This software module can be located on a CD or DVD or DVR disc to be loaded into the DVD streamer or DVR hardware.
It can also be provided by downloading via the Internet if an Internet connection is available on the DVD streamer or DVR hardware. Alternatively, a special plug-in can be provided to realise this functionality within the recorder 1 or the recorder 8.
The plug-in can be distributed either by means of the recording media itself or via an Internet connection. For example, a raw DVD for recording a data stream can have/get stored on it a corresponding plug-in such that the plug-in is executed when the DVD is inserted into the recorder before the recording starts.

## Claims

1. Method for recording a data stream, including the steps:
- providing (2, 3) an arrival time stamp for each data packet of said data stream, which arrival time stamps represent the arrival times of said data packets and are intended for temporally correct replay of the data stream to be recorded;
- re-stamping (7) said arrival time stamps in accordance with a desired data rate for the playback of said data stream to be recorded.

2. Method according to claim 1, wherein said data stream comprises video and/or audio data packets, the data stream preferably being in the MPEG-2 format.

3. Method according to claim 1 or 2, wherein the data stream is received via an Internet connection.

4. Method according to one of claim 1 to 3, wherein said desired data rate is provided by a user of a recorder for said data stream, said recorder preferably having a graphical user interface (6) for the input of said desired data rate.

5. Method according to one of claim 1 to 4, wherein said desired data rate is obtained by analysing (9) the received data stream to be recorded.

6. Method according to claim 5, wherein said desired data rate is predetermined in accordance with the nature of said data stream, the predetermined data rate preferably being 25 or 30 video frames per second in the case of video data.

7. Digital recorder for recording a data stream, including:
- means (2, 3) for providing an arrival time stamp for each data packet of said data stream, which arrival time stamps represent the arrival times of said data packets and are intended for temporally correct replay of the data stream to be recorded;
- means (4, 5, 7, 9) for re-stamping said arrival time stamps in accordance with a desired data rate for the playback of said data stream to be recorded.

8. Recorder according to claim 7, further including means for receiving said data stream via the Internet, preferably in the MPEG-2 format.

9. Recorder according to claim 7 or 8, further including a graphical user interface (6) for inputting said desired data rate by a user.

10. Recorder according to one of claims 7 to 9, further including means (9) for analysing said data stream in order to select a predetermined data rate in accordance with the nature of said data stream, the predetermined data rate preferably being 25 or 30 video frames per second in the case of video data.

11. Computer program product storing data for carrying out a method in accordance with one of claims 1 to 6.

12. Digital versatile disk, e.g. DVD streamer disk or DVR disk, storing data for carrying out a method in accordance with one of claims 1 to 6.

13. Plug-in program for download over the Internet including a computer program product in accordance with claim 11.
